Europäisches Patentamt

European Patent Office

Office européen des brevets

(19)

(11) Veröffentlichungsnummer: **0 226 692 B1**

# (12) EUROPÄISCHE PATENTSCHRIFT

(45) Veröffentlichungstag der Patentschrift: **08.01.92**

(51) Int. Cl.⁵: **B60N 2/44**, A47C 7/74

(21) Anmeldenummer: **86104672.0**

(22) Anmeldetag: **05.04.86**

(54) **Heizleiterverbindung zwischen durch einen im Polsterkern vorgesehenen Abspanngraben getrennten, elektrisch beheizten Sitz- bzw. Lehnenflächen zur Sitzbeheizung von Fahrzeugen.**

(30) Priorität: **17.12.85 DE 3544499**

(43) Veröffentlichungstag der Anmeldung:
**01.07.87 Patentblatt 87/27**

(45) Bekanntmachung des Hinweises auf die
Patenterteilung:
**08.01.92 Patentblatt 92/02**

(84) Benannte Vertragsstaaten:
**BE DE FR GB IT NL SE**

(56) Entgegenhaltungen:
**WO-A-84/04221**
**DE-C- 3 425 798**
**DE-U- 8 137 914**

(73) Patentinhaber: **I.G. Bauerhin GmbH elektrotechnische Fabrik**

**W-6466 Gründau-Rothenbergen(DE)**

(72) Erfinder: **Altmann, Dieter**
**Herzbergstrasse 23**
**W-6466 Gründau-Lieblos(DE)**
Erfinder: **Haupt, Eberhard**
**Im Rohr**
**W-6466 Gründau-Rothenbergen(DE)**

(74) Vertreter: **Munderich, Paul, Dipl.-Ing.**
**Frankfurter Strasse 84**
**W-6466 Gründau-Rothenbergen(DE)**

## Beschreibung

Die Erfindung betrifft eine Heizleiterverbindung zwischen durch einen im Polsterkern vorgesehenen Abspanngraben getrennten, elektrisch beheizten Sitz- bzw. Lehnenflächen, wobei unterhalb des Abspanngrabens ein im Polsterkern eingebundener Spanndraht, der abschnittsweise durch fensterartige Ausnehmungen im Abspanngraben freigelegt ist, und weiterhin die ebenfalls im Abspanngraben vorgesehene Verbindungsnaht der Bezugsstoffe (Textil, Leder, Kunststoff) eine durch eine Einsteckschlaufe gebildete Schürze, die einen weiteren Spanndraht aufnimmt, mit einschließt, vorgesehen ist, zur Sitzbeheizung von Fahrzeugen, wobei zwischen den beheizten Flächen Verbindungsstege vorgesehen sind, auf welche ein verbindender Leiterabschnitt mäanderoder wellenförmig verlegt, anliegt.

Die bekannten elektrischen Verbindungen zwischen zwei oder mehreren beheizten Flächen einer Sitzbeheizung sind gegenüber Zug-, Stauchungs- und Biegebeanspruchungen besonders bruchgefährdet.

Hinzu kommt, daß in aller Regel zwischen den beheizten Flächen, wie erwähnt, ein Abspanngraben, d.h. eine Vertiefung, angeordnet ist, in dem die mit dem Bezugsstoff verbundene Spannschürze angeordnet ist, wobei dieser der Befestigung und Spannung des Bezuges über einen in sie eingeführten Spanndraht dient.

Dieser obere Spanndraht wird mit einem zweiten, im Sitzkern eingebetteten Spanndraht über Ausschnitte im Sitzkern durch Klammern verbunden.

Diese Lösung birgt die Gefahr in sich, daß es im Bereich der Heizleiterverbindung zwischen den sonst getrennten Heizflächen zu örtlichen Überhitzungen der verbindenden Heizleiter kommt. Dies führt zu einem Schaden und zu einer Zerstörung der Isolation und zu einer Verzunderung der feindrähtigen Heizleiterlitze, die im weiteren, in Verbindung mit den genannten möglichen mechanischen Beanspruchungen, schließlich den Bruch von Einzeldrähten bewirkt.

Die damit gegebene Verringerung des Heizleiterquerschnittes führt zu einer weiteren Steigerung der örtlichen Überhitzung, so daß der Heizleiter schließlich ganz durchbrennt und dabei meist sogar eine deutliche Sengstelle hinterläßt.

Diese Gefahrenstelle hat man auf verschiedene Art und Weise zu entschärfen versucht. So wird beispielsweise teilweise eine seitliche Umgehung der Abspannstelle vorgeschlagen. Dies ist jedoch meist nicht möglich, da ein solches Vorgehen die Ausbildung exakter Randbegrenzungen der Heizflächen nicht zuläßt.

Aus dem Dokument WO-A1-84/04221 ist eine Heizleiterverbindung bekannt, bei der die Heizleiter selbst von einer Fläche eines Sitzes zu der anderen führen.

Das Dokument DE-U1-81 37 914 beschreibt eine Heizleiterverbindung zwischen elektrisch beheizten Sitz- bzw. Lehnenflächen von Fahrzeugen gemäß dem Oberbegriff des Hauptanspruches.

Diese Verbindungseinrichtung zwischen mehreren Flächenheizelementabschnitten sieht vor, die Gefahr durch mechanische Beanspruchungen dadurch zu vermeiden, daß die Verbindung eine zwischen den Abschlußpunkten der einzelnen Flächenheizabschnitte in Wellen verlegte vieladrige Leiterlitze enthält, wobei die Leiterlitze mit den beidseitigen Anschlußdrähten durch Krempenhülsen so verbunden ist, daß die Anschlußdrähte jeweils von den Leiteradern umgeben in der Krempenhülse eingepreßt sind.

Die Verwendung einer Leiterlitze, die stark und flexibel genug ist, um die mechanischen Anforderungen zu erfüllen, vermeidet dank ihres großen Querschnittes die Gefahrder örtlichen Überhitzung.

Grundsätzlich hat diese Verbindung aber den Nachteil, daß der Heizleiter unterbrochen werden muß, und jeweils zwei Verbindungsstellen, Heidraht - Leiterlitze, entstehen.

Sofern diese Verbindungen noch in der Heizfläche liegen, bilden sie harte Stellen, die sich auf dem darüberliegenden Bezugsstoff, insbesondere bei Leder- und Veloursbezug, abzeichnen und durch diese hindurch fühlbar sind.

Bei Einbringung der Verbindungen in den Spanngraben sind diese aufgrund ihrer Steifheit einer erhöhten mechanischen Beanspruchung ausgesetzt, die leicht zur Trennung vom Heizleiter führen kann.

Wie die Praxis zeigt, ist die Verbindung eines dünnen Drahtquerschnittes mit dem Querschnitt einer vielfach stärkeren Litze immer problematisch. Außerdem erfordert die Verlegung innerhalb des Abspanngrabens eine große Sorgfalt, die in der Regel nicht bei der im Zeitlohn ausgeführten Montage der Sitze voraussetzbar ist.

Diese Sachlage berücksichtigend ist es Aufgabe dieser Erfindung, eine Heizleiterverbindung nach der eingangs beschriebenen Art zu nennen, die ohne Trennung des Heizleiters, im Bereich des Spanngrabens, dessen sichere, spannungsfreie Verlegung ermöglicht.

Die erfindungsgemäße Lösung sieht vor, daß die Verbindungsstege aus Kupferband aus einem Gewebe oder Gewirke bestehen, und die Verbindungsstege aus einem zweilagigen Kupferband bestehen, wobei der in Mäandern geführte Heizleiter frei beweglich zwischen den beiden Lagen angeordnet ist.

Durch die Einbettung zwischen zwei Schichten des Kupferbandes ist ein zusätzlicher Schutz des Heizleiterabschnittes gegeben, da eine unmittelbare Behinderung der Bewegungsfreiheit durch den leicht prägsamen Textilstoff verhindert wird.

Zur weiteren Ausbildung wird vorgeschlagen, daß im Bereich der Randbegrenzungen der zu verbindenden beheizten Flächen die Verbindungsstege in einem Winkel zwischen 30° und 60° spiegelbildlich zueinander verlegt und in ihrer Länge so bestimmt sind, daß die Enden der Verbindungsstege mindestens etwa 20 mm beidseitig des Abspanngrabens in die zu verbindenden beheizten Flächen eingreifen.

Durch die in einem Winkel zwischen 30° und 60° spiegelbildlich zueinander verlegten Verbindungsstege ist deren freie, für deren Formänderung zur Verfügung stehende Länge vergrößert, so daß eine weitere Reduzierung der Bruchgefahr erreicht wird.

Die winklige Anordnung der Verbindungsstege, die man, in der Verlängerung betrachtet, als V-förmig bezeichnen kann, stabilisiert die Lage der beiden beheizten Flächen zueinander.

Des weiteren wird durch den Eingriff der Verbindungsstege in die beheizten Flächen deren Verbindungskontakt zusätzlich gesichert.

Diese Ausbildung der Heizleiterverbindung bzw. der Auflage auf dem Polsterkern sichert nicht nur deren fixierte Anbindung, d.h. eine praktisch rutschfreie Verbindung, sondern darüberhinaus auch eine einfache Schnellmontage der Heizflächen bei exakter Begrenzung zum Abspanngraben.

Darüberhinaus wird der im Abspanngraben anfallende Wärmestau durch das Kupferband mit Sicherheit in die Heizflächen abgeleitet.

Weiterhin ist vorgesehen, daß der auf dem Verbindungssteg anliegende wellen- bzw. mäanderförmig verlegte Heizleiter zumindest an seinen Wendepunkten verschiebbar kraftschlüssig fixiert ist, daß der Heizleiter nicht haftend beschichtet ist, und daß die nicht haftende Beschichtung aus Polytetrafluoräthylen besteht (Teflon®).

Die Erfindung wird durch die Darstellung einer beispielsweisen Ausführungsform näher erläutert.

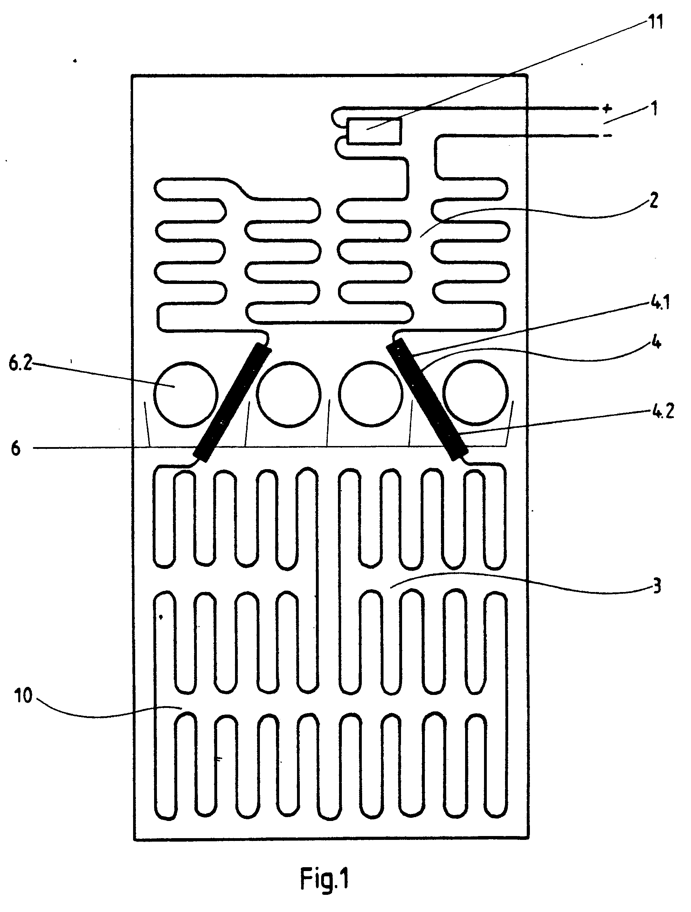

Figur 1 zeigt   im Grundriß den Verlegeplan der Heizleitung für zwei zusammenhängende Flächen.

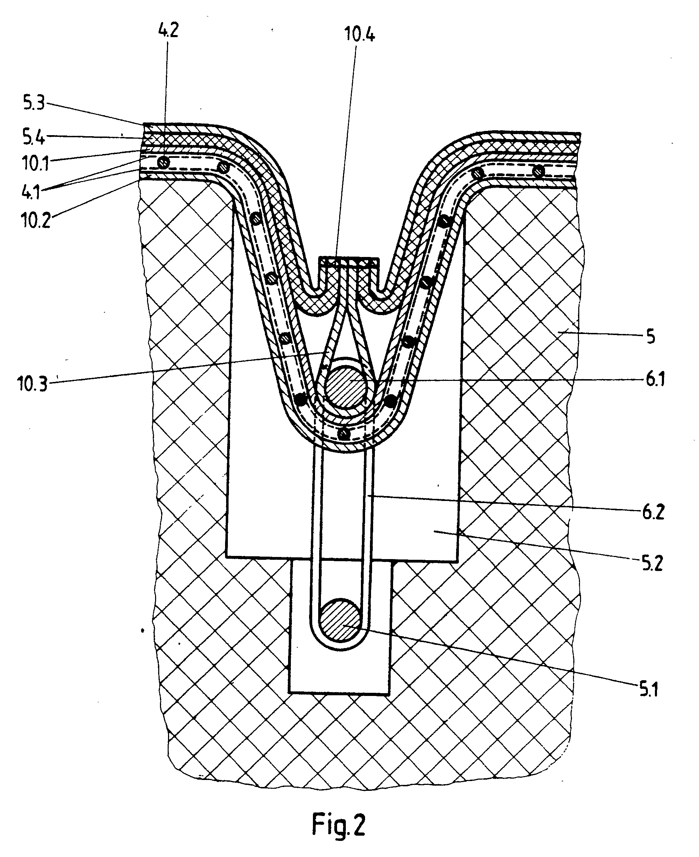

Figur 2 zeigt   den durch einen in Schürze eingeschobenen Spanndraht in Verbindung mit dem im Abspanngraben des Polsterkerns angebrachten zweiten Spanndraht.

Die Flächen des Sitzes und der Lehne werden durch einen zwischen zwei Schichten des Textilstoffes angeordneten, mäanderförmigen Heizleiter beheizbar ausgebildet, wobei die beiden Heizflächen 2 und 2 im Bereich ihrer Unterteilung, im Falle dieses Beispiels, durch vier gleichmäßig über die Breite verteilte Großlochungen 6.2 markiert sind. Der Zwischenraum zwischen den Lochungen 6.2, einschließlich der beidseitig gleichen Randbereiche, bildet Verbindungsbrücken 6, die, in Verbindung mit einem am Bezugsstoff 5.3 befestigten Traggewebe 10.3 als Spannschürzen Verwendung finden.

Die jeweils zweite Verbindungsbrücke, vom Rand der Breitenabmessung aus betrachtet, ist Träger der Verbindungsstege 4.0.
Diese sind in spiegelbildlich zueinander gerichteten Winkeln, die in etwa 60° betragen, angeordnet und führen von ihren Endbegrenzungen, jeweils etwa um 25 mm, in die zu beheizenden Flächen ein, wo sie jeweils den außen liegenden, mäanderförmigen Heizschleifen anliegen.
Dabei hat es sich als zweckmäßig erwiesen, die Heizschleifen beider Flächen 2 und 3 rechtwinklig zueinander verlaufend auszulegen.

Die beidseitig durch Kupferbandgewirke oder -gewebe 4.1 abgedeckten, wellenförmig verlegten Heizleiterabschnitte 4.2 bilden, zusammen mit den Textilschichten, jeweils einen relativ breiten Verbindungssteg 4.0.
Durch die zwangsläufig durch die Lochungen in Verbindung mit dem dem Bezugsstoff 5.3 verbundenen Traggewebe 10.3 gebildete Spannschürze ist ein Spanndraht 6.1 geführt, der mit dem darunterliegenden, im Polster 5 fixierten Spanndraht 5.1 durch Klammern 6.2 befestigt ist.
Die in der Sohle des Abspanngrabens 5.2 angeordneten Öffnungen zu dem Spanndraht 5.1 korrespondieren mit der Anordnung der Klammern 6.2, so daß auf einfache Art und Weise die Verbindung zwischen den beiden Spanndrähten 5.1 und 6.1 hergestellt werden kann.

Die Ausbildung der Verbindungsstege 4.0, sowie ihre Anordnung erlauben die Aufnahme großer Dehnungen.
Zwischen der Unterseite des Bezugsstoffes 5.3 ist eine Schaumlage 5.4 angeordnet, die ihrerseits wieder, und zwar zum Polsterkern 5.0 gerichtet, die beheizten Flächen 2 und 3 gegen die Oberfläche des Polsterkerns andrückt.

Die beheizten Flächen 2 und 3 haben gemeinsame elektrische Anschlüsse 1.

Abschließend soll zum besseren Verständnis nochmals auf den Gesamtaufbau der zusammenhängenden Heizflächen 2 und 3 hingewiesen werden.
Die beiden Heizflächen 2 und 3 sind lediglich durch die Lochungen 6.2 getrennt, wobei, wie erwähnt, die Zwischenräume in Verbindung mit dem Traggewebe 10.3 die eigentliche Spannschürze bilden.
Die Leiter beider Flächen 2 und 3 sind, gemäß Verlegeplan, auf einer zunächst die Textil-Unterseite 10.2 aufnehmenden Nadelschablone ausgelegt und werden mit der Textil-Oberseite 10.1 durch einen Heißbügelprozeß verbunden, wobei unter dem Bezugsstoff 5.3, wie erwähnt, die Schaumlage 5.4 angeordnet und über die verlegten Heizleiter gegen den Polsterkern 5 gerichtet ist.

Der Gesamtheizkörper 10 ist mit den elektrischen Anschlüssen 1 versehen, wobei die Position 11 ein Sicherheitsthermostat darstellt.

**Patentansprüche**

1. Heizleiterverbindung zwischen durch einen im Polsterkern (5) vorgesehenen Abspanngraben (5.2) getrennten, elektrisch beheizten Sitz-bzw. Lehnenflächen, wobei unterhalb des Abspanngrabens (5.2) ein im Polsterkern (5) eingebundener Spanndraht (5.1), der abschnittsweise durch fensterartige Ausnehmungen im Abspanngraben (5.2) freigelegt ist, und weiterhin die ebenfalls im Abspanngraben (5.2) vorgesehene Verbindungsnaht (10.4) der Bezugsstoffe (5.3) (Textil, Leder oder Kunststoff) eine durch eine Einsteckschlaufe gebildete Schürze (10.3), die einen weiteren Spanndraht (6.1) aufnimmt, mit einschließt, vorgesehen ist, zur Sitzbeheizung von Fahrzeugen, wobei zwischen den beheizten Flächen (2 und 3)-Verbindungsstege vorgesehen sind, auf welche ein verbindender Leiterabschnitt (4.2) mäander- oder wellenförmig verlegt, anliegt, dadurch gekennzeichnet,

   daß die Verbindungsstege (4.0) aus Kupferband (4.1), aus einem Gewebe oder Gewirke bestehen, und die Verbindungsstege (4.0) aus einem zweilagigen Kupferband (4.1) bestehen, wobei der in Mäandern geführte Heizleiter (4.2) frei beweglich zwischen den beiden Lagen angeordnet ist.

2. Heizleiterverbindung nach Anspruch 1, dadurch gekennzeichnet,

   daß im Bereich der Randbegrenzungen der zu verbindenden beheizten Flächen (2/3) die Verbindungsstege (4.0) in einem Winkel zwischen 30° und 60° spiegelbildlich zueinander verlegt und in ihrer Länge so bestimmt sind, daß die Enden der Verbindungsstege (4.0) mindestens etwa 20 mm beidseitig des Abspanngrabens (5.2) in die zu verbindenden beheizten Flächen (2/3) eingreifen.

3. Heizleiterverbindung nach Anspruch 1, dadurch gekennzeichnet,

   daß der auf dem Verbindungssteg (4.0) anliegende wellen- bzw. mäanderförmig verlegte Heizleiter zumindest an seinen Wendepunkten verschiebbar kraftschlüssig fixiert ist, und

   daß der Leiter nicht haftend beschichtet ist.

4. Heizleiterverbindung nach Anspruch 2, dadurch gekennzeichnet,

   daß die nicht haftende Beschichtung aus Polytetrafluoräthylen besteht.

**Claims**

1. A heating conductor connection between electrically heated seat and backrest surfaces separated by an anchoring groove provided in the upholstery core (5), wherein a clamping wire (5.1) is provided below the anchoring groove (5.2), within the upholstery core (5), which wire is exposed, section-wise, through window-type recesses in the anchoring groove (5.2), and wherein tee connecting seam (10.4) of the covers (5.3) (textiles, leather or synthetic material) equally provided in the anchoring groove (5.2) encloses an apron (10.3) formed by a plug-type ear and accommodating another clamping wire (6.1), for heating the seats of automotive vehicles, with connecting bridges being provided between the heated surfaces (2 and 3) on which is disposed a conductor section (4.2) laid in meander-or wave-type manner,

   characterized in that the connecting bridges (4.0) are composed of a fabric or network and the connecting bridges (4.0) consist of a dual-layer copper band (4.1), with the heating conductor (4.2) guided in meanders being located in a manner freely movable between the two layers.

2. A heating conductor connection according to claim 1,

   characterized in that, in the area of the marginal boundaries of the heated surfaces (2/3), the connecting bridges (4.0) are laid at an angle of between 30° and 60° in a manner mirror-inverted with respect to one another, and that the length thereof is dimensioned such that the ends of the connecting bridges (4.0) penetrate to a depth of at least 20 mm on either side of the anchoring groove (5.2) into the heated surfaces (2/3) to be connected.

3. A heating conductor connection according to claim 1,

   characterized in that the heating conductor provided on the connecting bridge (4.0) and laid in wave- or meander-type manner, at least at the turning points thereof is displaceably fixed in force-locking manner, and

that the conductor is coated in non-adhesive manner.

4. A heating conductor connection according to claim 2,

characterized in that the non-adhesive coating consists of polytetrafluoroethylene.

**Revendications**

1. Raccordement de conducteurs chauffants entre des surfaces d'assise et de dossier, respectivement, qui sont chauffées électriquement et qui sont séparées par une cavité à dispositif tendeur (5.2) prévue dans le noyau du rembourrage (5), pour le chauffage de sièges de véhicules cependant qu'il est prévu, au-dessous de la cavité à dispositif tendeur (5.2), un fil tendeur (5.1) qui est noyé dans le noyau du rembourrage (5) et qui en est dégagé par endroits à travers des évidements en forme de fenêtres ménagés dans la cavité à dispositif tendeur (5.2), qu'en outre le fil de liaison (10.4) des matières d'habillage (5.3) (textile, cuir ou matière plastique), lequel est également prévu dans la cavité à dispositif tendeur (5.2), inclut un tablier (10.3) qui est formé par une boucle à embrochement et qui reçoit un autre fil tendeur (6.1), et qu'il est prévu entre les surfaces chauffées (2 et 3) des barrettes de liaison sur lesquelles repose une section de conducteur de liaison (4.2) posée en forme de méandres ou d'ondulations, caractérisé par le fait que les barrettes de liaison (4.0) sont constituées par une bande de cuivre (4.1) à structure tissée ou à mailles, et que les barrettes de liaison (4.0) sont constituées par une bande de cuivre à deux couches (4.1), le conducteur chauffant (4.2) guidé selon des méandres étant disposé entre les deux couches en pouvant se déplacer librement.

2. Raccordement de conducteurs chauffants selon la revendication 1, caractérisé par le fait que, dans la région de la délimitation de bord des surfaces chauffées à relier (2/3), les barrettes de liaison (4.0) sont posées sous un angle compris entre 30° et 60° en étant symétriques l'une par rapport à l'autre, et que leurs longueurs sont déterminées de telle manière que les extrémités des barrettes de liaison (4.0) pénètrent dans les surfaces chauffées à relier (2/3), des deux côtés de la cavité à dispositif tendeur (5.2), sur au moins 20 mm environ.

3. Raccordement de conducteurs chauffants selon la revendication 1, caractérisé par le fait que le conducteur chauffant qui est posé en forme de méandres ou d'ondulations et qui porte sur la barrette de liaison (4.0) est fixé par adhérence, du moins en ses points d'inflexion, en pouvant se déplacer, et par le fait que le conducteur est revêtu de manière à ne pas adhérer.

4. Raccordement de conducteurs chauffants selon la revendication 2, caractérisé par le fait que le revêtement non-adhérent est constitué par du polytétrafluoréthylène.

Fig.1

Fig.2